Europäisches Patentamt

European Patent Office

Office européen des brevets

(19)

(11) Publication number : **0 119 174**
**B1**

# EUROPEAN PATENT SPECIFICATION

(12)

(45) Date of publication of patent specification :
08.07.87

(51) Int. Cl.⁴ : **F 16 K 17/196**, B 60 K 15/00

(21) Application number : 84830063.8

(22) Date of filing : 09.03.84

(54) **Double-acting breather valve, particularly for fuel tanks of motor vehicles.**

(30) Priority : 14.03.83 IT 6728083
10.06.83 IT 5345483 U

(43) Date of publication of application :
19.09.84 Bulletin 84/38

(45) Publication of the grant of the patent :
08.07.87 Bulletin 87/28

(84) Designated contracting states :
DE FR GB IT SE

(56) References cited :
DE-A- 2 207 210
FR-A- 840 562
US-A- 3 613 718
US-A- 3 650 256
US-A- 3 738 384
US-A- 4 023 583
US-A- 4 033 375
US-A- 4 317 467

(73) Proprietor : FIAT AUTO S.p.A.
Corso Giovanni Agnelli 200
I-10135 Torino (IT)

(72) Inventor : Lucchini, Giuseppe
Via Pio Foa 72
I-10126 Torino (IT)

(74) Representative : Notaro, Giancarlo et al
c/o Jacobacci-Casetta & Perani S.p.A. Via Alfieri, 17
I-10121 Torino (IT)

Jouve, 18, rue St-Denis, 75001 Paris, France

# Description

The present invention relates to double-acting breather valves, particularly for fuel tanks of motor vehicles, of the type comprising :

a valve body having an internal cavity and having two opposed apertures which open into the said internal cavity, the valve body being defined by two cup-shaped pressings having internal cavities facing each other and circumferential flanges welded together, between the said flanges there being clamped an annular sealing gasket which defines an annular abutment, and valve means for putting the two said opposed apertures into communication with each other when these apertures are in communication with different ambient pressures, said valve means comprising a first element having a cylindrical external wall and mounted slidably in the internal cavity of the valve body and having a through passage, a first spring which urges the said first element against said annular abutment of the valve body, a second element having a cylindrical external wall and mounted slidably in the internal cavity of the valve body, on the side of the first element opposite the said first spring, and provided with an obturator for controlling communication through the said passage between the two zones of the internal cavity separated by the first element, and a second spring which urges the second element towards the first element.

An example of a valve of the type specified above is described in US-A-3 613 718 (All-O-Matic).

The valve illustrated in this document has the two above elements slidably mounted in the internal cavity with an accurate and gas-tight coupling, which makes the valve rather complicated and expensive.

It is also known from DE-A-2 207 210 (F & E Manufacturing Co.) to use in a fuel filler cap a breather valve with movable elements mounted slidably with play in the internal cavity of the valve.

The object of the present invention is the provision of a breather valve for fuel tanks, of the type specified at the beginning of this description, which is made up of a reduced number of parts, of simple construction and low cost.

With said object in view the invention provides a breather valve characterised in that said cylindrical external wall of the first element and said cylindrical external wall of the second element are mounted slidably with play in the internal cavity of the valve body each forming a passage between the cylindrical external wall and the valve body, and in that the said obturator is separate from the said second element.

Further characteristics and advantages of the present invention will become apparent from the description which follows with reference to the appended drawings, provided by way of nonlimiting example, in which :

Figure 1 illustrates a breather valve, according to the present invention, in a rest condition, corresponding to the condition in which the pressure within the fuel tank is equal to atmospheric pressure,

Figure 2 illustrates the breather valve in a first operative condition, corresponding to the condition in which the pressure within the fuel tank is greater than atmospheric pressure, and

Figure 3 illustrates the breather valve in a second operative condition, corresponding to the condition in which the pressure within the fuel tank is lower than atmospheric pressure.

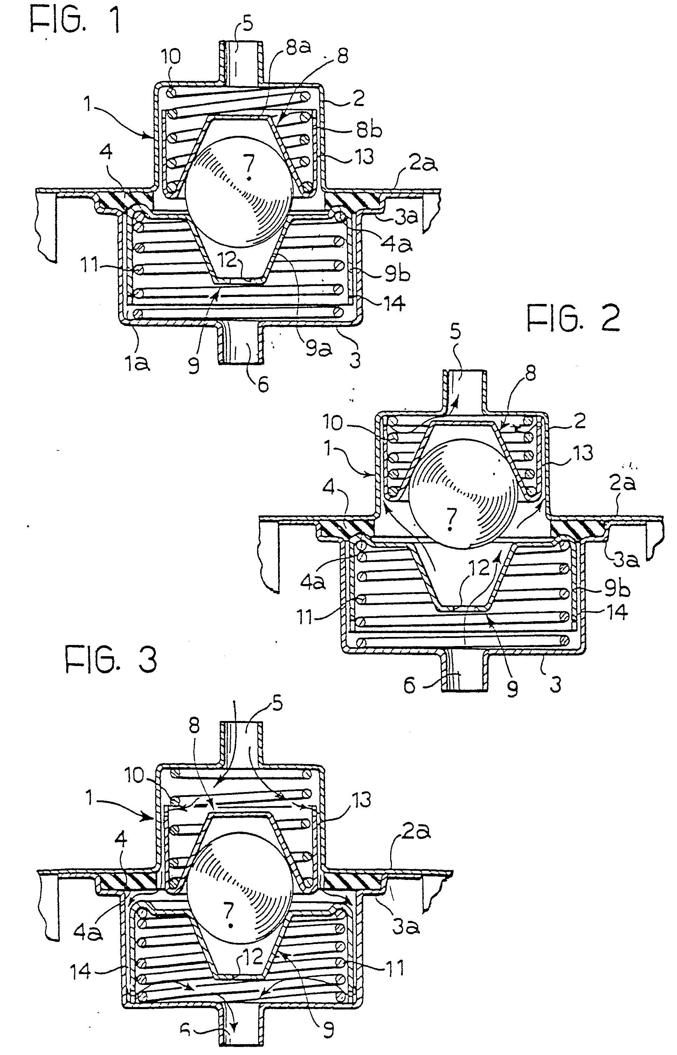

With reference to Figure 1, the breather valve comprises a valve body 1 including two cup-shaped pressings 2, 3 having cavities facing each other and having respective circumferential flanges 2a, 3a which are welded together. Between the flanges 2a, 3a there is interposed an annular abutment within the cavity 1a defined by the two pressings 2, 3. The breather valve is fitted in the upper wall of the fuel tank of a motor vehicle. The cup-shaped pressing 2 has a central aperture 5 through which the internal cavity of the body 1 communicates with the atmosphere. The cup-shaped pressing 3 has a central aperture 6 which puts the internal cavity 1a into communication which the internal cavity of the fuel tank (the fuel within the tank is always maintained — in normal operating conditions — at a level lower than that of the aperture 6).

Within the cavity 1a of the valve body 1 there is disposed first and second elements 9, 8 having respective central concave parts 9a, 8a facing each other between which there is interposed a spherical obturator 7. The first element 9 has a cylindrical external wall 9b which is mounted slidably with play within the internal cavity 1a of the valve body 1. Between the first element 9 and the bottom of the cup-shaped pressing 3 there is interposed a spring 11 which urges the first element 9 against the annular abutment 4a defined by the annular sealing gasket 4. The second element 8 also has an external cylindrical wall 8b which is mounted slidably within the internal cavity 1a of the valve body, on the side of the first element 9 opposite the spring 11. A second spring 10 is interposed between the base of the cup-shaped pressing 2 and the second element 8, so as to urge the second element 8 and with it the spherical obturator 7 towards the first element 9. The latter has a central passage 12 which interconnects the two parts of the internal cavity 1a separated by the first element 9.

The reference numerals 13, 14 indicate the respective clearance gaps or play between the cylindrical walls 9b, 8b and the corresponding cylindrical walls of the cup-shaped pressings 3, 2 respectively.

With reference to Figure 1, when the pressure within the fuel tank is equal to atmospheric pressure, the spring 11 holds the first element 9 against the annular abutment 4a defined by the annular sealing gasket 4, and the spring 10 urges the second element 8, and with it the spherical obturator 7, against the central concave part 9a of the first element 9. Under these conditions the fuel tank is hermetically sealed, since the apertures 5, 6 are not in communication with each other.

With reference to Figure 2, if the pressure within the fuel tank becomes greater than atmospheric pressure, the spherical obturator 7 is displaced with the second element 8, causing compression of the spring 10. In consequence, the aperture 6 is put into communication with the aperture 6 is put into communication with the aperture 5 through the passage 12, the space between the two elements 8, 9 and the clearance gap 13. When the pressure within the fuel tank returns to atmospheric pressure the second element 8 returns with the spherical obturator 7 to the position illustrated in Figure 1.

With reference to Figure 3, if the pressure within the fuel tank becomes lower than atmospheric pressure, the spherical obturator 7 is displaced in the direction of the first element 9, causing compression of the spring 11. In the course of this movement, the second element 8 is maintained in contact with the spherical obturator 7 by the spring 10. The element 9 thus becomes spaced from the annular abutment 4a defined by the annular sealing gasket 4, so that the aperture 6 is put into communication with the aperture 5 through the clearance gap 14, the chamber defined between the two elements 8, 9 and the clearance gap 13. When the pressure within the fuel tank returns to atmospheric pressure, the spherical obturator 7 returns to the position illustrated in Figure 1.

As will be evident from the preceding description, the double-acting valve illustrated in the drawings has two valve seats : a first valve seat is constituted by the central concave portion 9a of the element 9, cooperating with the spherical obturator 7 ; a second valve seat is constituted by the annular abutment 4a defined by the annular sealing gasket 4, cooperating with the element 9.

Although in the example described above the obturator 7 is in the form of a spherical ball, it is also possible to provide an obturator of different configuration.

## Claims

1. Double-acting breather valve, particularly for fuel tanks of motor vehicles, comprising a valve body (1) having an internal cavity (1a) and having two opposite apertures (5, 6) which open into the said internal cavity (1a) ; the valve body (1) being defined by two cup-shaped pressings (2, 3) having internal cavities facing each other and circumferential flanges (2a, 3a) welded together ; between the said flanges there being clamped an annular sealing gasket (4) which defines an annular abutment (4a), and valve means (4, 7, 9) for putting the two said opposite apertures (5, 6) into communication with each other when these apertures are in communication with different ambient pressures, said valve means comprising a first element (9) having a cylindrical external wall (9b) and mounted slidably in the internal cavity (1a) of the valve body (1) and having a through passage (12), a first spring (11) which urges the said first element (9) against said annular abutment (4a) of the valve body (1), a second element (8) having a cylindrical external wall (8b) and mounted slidably in the internal cavity of the valve body, on the side of the first element (9) opposite the said first spring (11), and provided with an obturator (7) for controlling communication through the said passage (12) between the two zones of the internal cavity (1a) separated by the first element (9), and a second spring (10) which urges the second element (8) towards the first element (9), characterised in that said cylindrical external wall (9b) of the first element (9) and said cylindrical external wall (8b) of the second element (8) are mounted slidably with play in the internal cavity (1a) of the valve body (1), each forming a passage (13, 14) between the cylindrical external wall (9b, 8b) and the valve body (1), and in that the said obturator (7) is separate from the said second element (8).

2. Valve according to Claim 1, characterised in that the said obturator (7) is of spherical form.

3. Valve according to Claim 2, characterised in that the first element (9) and the second element (8) have two central concave parts (9a, 8a) which face each other and which cooperate with the spherical obturator (7).

## Patentansprüche

1. Doppeltwirkendes Belüftungsventil, insbesondere für Kraftstofftanks von Kraftfahrzeugen, mit einem Ventilkörper (1) mit einer inneren Kammer (1a) und zwei an entgegengesetzten Seiten angeordneten Öffnungen (5, 6), die sich in die innere Kammer (1a) öffnen, wobei der Ventilkörper (1) bestimmt ist durch zwei becherförmige Preßteile (2, 3) mit einander zugewandten inneren Kammern und zusammengeschweißten umlaufenden Flanschen (2a, 3a), zwischen denen ein Dichtungsring (4) eingeklemmt ist, der einen ringförmigen Anschlag (4a) bestimmt, sowie mit Ventilmitteln (4, 7, 9) durch die die beiden entgegengesetzten Öffnungen (5, 6) miteinander in Verbindung gebracht werden können, wenn diese mit unterschiedlichen Umgebungsdrücken ausgesetzt sind, wobei die Ventilmittel folgende Teile umfassen : ein erstes Element (9) mit einer zylindrischen Außenwandung (9b), das gleitbar in der inneren Kammer (1a) des Ventilkörpers (1) montiert ist und einen Durchgang (12) besitzt, eine erste Feder (11), die das erste Element (9) gegen den ringförmigen Anschlag (4a) des Ventilkörpers (1) vorspannt, ein zweites Element (8) mit einer zylindrischen Außenwandung (8b), das gleitbar auf der der ersten Feder (11) entgegengesetzten Seite des ersten Elements (9) in der inneren Kammer (1a) des Ventilkörpers (1) montiert ist und ein Verschlußteil (7) aufweist, das die Verbindung durch den genannten Durchgang (12) zwischen den beiden durch das erste Element (9) getrennten Zonen der inneren Kammer (1a) des Ventilkörpers steuert, und eine zweite Feder (10), die das zweite Element (8) in Richtung auf das erste Element (9) vorspannt, dadurch gekennzeichnet, daß die zylindrische Außenwandung (9b) des ersten Elements (9) und die zylindrische Außenwandung (8b) des zweiten Elements (8) mit Spiel in der inneren Kammer (1a) des Ventilkörpers (1) gleiten, wobei jedes dieser Elemente einen Durchgang (13, 14) zwischen seiner zylindrischen Außenwandung (9b, 8b) und dem Ventilkörper (1) bildet, und daß das Verschlußteil (7) ein von dem zweiten Element (8) getrenntes Teil ist.

2. Ventil nach Anspruch 1, dadurch gekennzeichnet, daß das Verschlußteil (7) Kugelform hat.

3. Ventil nach Anspruch 2, dadurch gekennzeichnet, daß das erste Element (9) und das zweite Element (8) zwei zentrale konkave Teile (9a, 8a) besitzen, die einander zugewandt sind und mit dem kugelförmigen Verschlußteil (7) zusammenwirken.

**Revendications**

1. Soupape d'aération à double effet, en particulier pour réservoirs de carburant de véhicules automobiles, comprenant un corps de soupape (1) présentant une cavité intérieure (1a) et deux ouvertures opposées (5, 6) qui débouchent dans ladite cavité intérieure (1a), le corps de soupape (1) étant défini par deux pièces embouties (2, 3) en forme de godet et qui présentent des cavités intérieures opposées face à face et des collerettes circonférentielles (2a, 3a) soudées l'une à l'autre ; une garniture d'étanchéité annulaire (4) définissant une butée annulaire (4a) étant serrée entre les collerettes, et des moyens formant clapet (4, 7, 9) destinés à mettre les deux ouvertures opposées (5, 6) en communication l'une avec l'autre lorsque ces ouvertures sont en communication avec des pressions ambiantes différentes, lesdits moyens formant clapet comprenant un premier élément (9) qui possède une paroi extérieure cylindrique (9b), est monté coulissant dans la cavité intérieure (1a) du corps (1) de la soupape et présente un passage traversant (12), un premier ressort (11) qui tend à appliquer ledit premier élément (9) contre ladite butée annulaire (4a) du corps (1) de la soupape, un deuxième élément (8) qui possède une paroi extérieure cylindrique (8b), est monté coulissant dans la cavité intérieure du corps de la soupape, sur le côté du premier élément (9) qui est à l'opposé dudit premier ressort (11), et est muni d'un obturateur (7) destiné à commander la communication à travers ledit passage (12) entre les deux zones de la cavité intérieure (1a) qui sont séparées par le premier élément (9), et un deuxième ressort (10) qui tend à rapprocher le deuxième élément (8) du premier élément (9), caractérisé en ce que ladite paroi extérieure cylindrique (9b) du premier élément (9) et ladite paroi extérieure cylindrique (8b) du deuxième élément (8) sont montées pour coulisser avec jeu dans la cavité intérieure (1a) du corps (1) de la soupape, chacune formant un passage (13, 14) entre la paroi extérieure cylindrique (9b, 8b) et le corps (1) de la soupape ; et en ce que ledit obturateur (7) est séparé dudit deuxième élément (8).

2. Soupape selon la revendication 1, caractérisée en ce que ledit obturateur (7) est de forme sphérique.

3. Soupape selon la revendication 2, caractérisée en ce que le premier élément (9) et le deuxième élément (8) possèdent deux parties centrales concaves (9a, 8a) opposées face à face et qui coopèrent avec l'obturateur sphérique.

FIG. 1

FIG. 2

FIG. 3